# EUROPÄISCHE PATENTSCHRIFT

(11) **EP 4 118 124 B1**
(45) Veröffentlichungstag und Bekanntmachung des Hinweises auf die Patenterteilung: **17.06.2026**
(21) Anmeldenummer: 21707272.7
(22) Anmeldetag: 26.02.2021
(51) Int. Cl.: C08F 220/14, C09D 5/18, C08F 220/18, C09D 133/02, C09D 133/10, C08F 265/06, C09D 151/00

(54) **VERBESSERTES HARZSYSTEM FÜR INTUMESZENZ-BESCHICHTUNGEN**
IMPROVED RESIN SYSTEM FOR INTUMESCENT COATINGS
SYSTÈME DE RÉSINE AMÉLIORÉ POUR REVÊTEMENTS INTUMESCENTS

(30) Priorität: 11.03.2020 EP 20162308
(43) Veröffentlichungstag der Anmeldung: 18.01.2023
(73) Patentinhaber: Röhm GmbH, 64295 Darmstadt (DE)
(72) Erfinder: KELLER, Bruno, 55263 Wackernheim (DE); BALK, Sven, 60329 Frankfurt (DE)
(74) Vertreter: Röhm Patent Association
(86) Internationale Anmeldenummer: PCT/EP2021/054789
(87) Internationale Veröffentlichungsnummer: WO 2021/180488

(56) Entgegenhaltungen:
- EP-A1- 1 636 318
- JP-A- 2003 171 579

## Beschreibung

### Gebiet der Erfindung

Die vorliegende Erfindung betrifft eine neuartige Formulierung zur 2K-Intumeszenz-Beschichtung. Intumeszenz-Beschichtungen werden insbesondere zum Brandschutz von metallischen Bauteilen, wie Trägern im Hochbau eingesetzt. Dabei werden diese Beschichtungen in einem Brandfall reaktiv aufgeschäumt und bilden so eine feuerfeste Isolierschicht mit geringer Wärmeleitfähigkeit auf dem Metallträger und verzögert durch die damit entstehende Isolierung ein frühzeitiges, thermisch induziertes Versagen dieses Bauteils.

Die vorliegende Erfindung betrifft dabei insbesondere Formulierungen enthaltend Harzsysteme, die mittels eines Verfahrens, bei dem der Monomeranteil nur bis zu einem maximalen Grad von 70% polymerisiert wird, hergestellt werden. Dabei ist die Glasübergangstemperatur der polymeren Komponente der dabei gebildeten Zusammensetzung im Vergleich zum Stand der Technik besonders niedrig.

### Stand der Technik

Eine erste Generation der Intumeszenz-Beschichtungssysteme basierte auf hochmolekularen thermoplastischen Harzen auf Basis von Acrylaten, Methacrylaten und/oder Vinylmonomeren und benötigen einen großen Lösemittel- oder Wasseranteil zur Aufbringung auf die entsprechende Metalloberfläche mit entsprechend langen Trocknungszeiten.

Üblicherweise werden solche Intumeszenz-Beschichtung on-site während der Konstruktionsphase aufgetragen. Bevorzugt werden jedoch off-site Auftragungen vor der Anlieferung an die Baustelle, da diese unter kontrollierten Bedingungen erfolgen können. Bei einer langsamen Trocknung ergibt sich aber eine ineffiziente Bearbeitungsdauer, zumal die Beschichtung nacheinander von verschiedenen Seiten erfolgen muss, um vollständig zu sein.

Epoxybasierte Intumeszenz-Beschichtungen werden vorzugsweise in der off-shore Industrie verwendet. Sie zeichnen sich durch gute Alterungsbeständigkeit und relativ kurze Trocknungszeiten aus. Polyurethan-Systeme wurden intensiv untersucht. Sie zeichnen sich ebenfalls durch eine relativ kurze Trocknungszeit und eine gute Wasserbeständigkeit aus. Allerdings fielen hier die Feuertests negativ aus, da die Beschichtung keine gute Haftung auf Stahl aufweist. Details dazu können in Development of alternative technologies for off-site applied intumescent, Longdon, P. J., European Commission, [Report] EUR (2005), EUR 21216, 1-141 nachgelesen werden.

Eine weitere Generation von Intumeszenz-Beschichtungen basiert auf (Meth)acrylat-Reaktionsharzen. Der Auftrag dieser hat den großen Vorteil, dass hier keine Lösungsmittel benötigt werden, sondern das Hartz nach der Applikation im Vergleich relativ schnell aushärtet. So erhält man nicht nur eine schnellere Verarbeitung, sondern insbesondere auch einen geringeren Anteil an verbleibenden flüchtigen Bestandteilen in der aufgetragenen Beschichtung. Solche Intumeszenz-Beschichtungssysteme sind erstmals in EP 1 636 318 offenbart.

Eine weitere Verbesserung der (Meth)acrylat-basiertes Systeme ist daraufhin beispielsweise in EP 2 171 004 offenbart. Dieses zeichnet sich durch einen besonders hohen Anteil an Säuregruppen zur Verbesserung der Metallhaftung aus.

In EP 2 171 005 ist eine Weiterentwicklung zu einem solchen System offenbart. Diese zeichnet sich insbesondere durch Copolymerisation von di-Säuren oder copolymerisierbaren Säuren mit Spacergruppe aus. Dadurch kann die Metallhaftung zusätzlich verbessert werden.

Allen diesen Systemen unterliegen jedoch weiter einem Verbesserungsbedarf. So sind die Freiheitsgrade hinsichtlich der Formulierbarkeit stark eingeschränkt. Auch können ausschließlich relativ dicke Schichten aufgetragen werden. In der Kombination ergibt sich aus diesen Nachteilen z.B. auch, dass die Schaumhöhe im Bedarfs-, bzw. Brandfall nur in einem geringem Maß voreinstellen kann.

Darüber hinaus ergeben sich auch Nachteile aus dem relativ komplexen Herstellungsverfahren der Harze. Alle ansonsten sehr vorteilhaften, im Stand der Technik beschriebenen (Meth)acrylat-

Systemen ist gemein, dass hier das im Harz enthaltene feste, thermoplastische Polymer erst diskret hergestellt, dann in den Monomerkomponenten aufgelöst und mit Additiven vorformuliert werden und schließlich kurz vor der Applikation als 2K-System schlussformuliert wird. Diese Prozesskette ist relativ aufwendig und es besteht ein großes Interesse an einer Vereinfachung.

### Aufgabe

Der vorliegenden Erfindung lag daher die Aufgabe zugrunde, Formulierungen mit einem deutlich vereinfachten Verfahren zur Herstellung von (Meth)acrylat-basierten Intumeszenz-Beschichtungen bereitzustellen.

Insbesondere bestand dabei der Bedarf an einem vereinfachten Herstellverfahren, bei dem mindestens ein Isolations- oder Formulierungsschritt gegenüber den im Stand der Technik beschriebenen Verfahren zur Herstellung von (Meth)acrylat-basierten Intumeszenz-Beschichtungen eingespart werden kann.

Weiterhin bestand die Aufgaben eine neuartige Formulierung zur 2K-Intumeszenz-Beschichtung zur Verfügung zu stellen, die neben einer sehr guten Metallhaftung und einer einfachen Verarbeitbarkeit, zusätzlich größere Freiheiten bezüglich der Additivierung und der Einstellung einer späteren Schäumungskontrolle, insbesondere in Hinblick auf die Voreinstellung späterer Schaumhöhen und Schaumqualität, wie z.B. ein besonders hoher Anteil an geschlossen porigem Schaum zulässt.

Weitere nicht explizit aufgeführte Aufgaben können sich im Folgenden aus der Beschreibung oder den Beispielen, sowie aus dem Gesamtzusammenhang der Erfindung ergeben.

### Lösung

Gelöst werden diese Aufgaben mittels einer neuartigen Formulierung zur 2K-Intumeszenz-Beschichtung, wobei die Formulierung nach Mischen des 2K-Systems 30 bis 50 Gew% eines Reaktionsharzes, das herstellbar ist durch ein Verfahren, bei dem eine Monomermischung, enthaltend mindestens ein säurefunktionelles Monomer, bis zu einem Polymerisationsgrad von maximal 70 % polymerisiert und darauf die Polymerisation abgebrochen wird, und das dabei gebildete Polymer eine Glasübergangstemperatur von kleiner 23 °C aufweist, 35 bis 60 Gew% eines Treibmittels, 0,1 bis 2,5 Gew% eines Peroxids und/oder Azoinitiators, optional bis zu 2 Gew% eines Beschleunigers, optional 4,9 bis 15 Gew% Additive und 5 bis 30 Gew% Füllstoffe aufweist. Das Verfahren, durch das das Reaktionsharz herstellbar ist, ist dadurch gekennzeichnet, dass eine Monomermischung, enthaltend mindestens ein säurefunktionelles Monomer, bis zu einem Polymerisationsgrad von maximal 70%, diskontinuierlich in Batch-Fahrweise oder kontinuierlich im durchlaufenden Rührkessel mit anschließenden Strömungsrohr polymerisiert wird. Darauf wird die Polymerisation abgebrochen. Weiterhin ist das Verfahren, durch das das Reaktionsharz herstellbar ist, dadurch gekennzeichnet, dass das in dem Verfahren gebildete Polymer eine Glasübergangstemperatur von kleiner 23 °C, bevorzugt kleiner 20 °C und besonders bevorzugt kleiner 15 °C aufweist. Insbesondere bevorzugt beträgt die Glasübergangstemperatur des gebildeten Polymers zum Zeitpunkt des verfahrensgemäßen Polymerisationsabbruchs mindestens -20 °C, besonders bevorzugt mindestens -10 °C.

Bevorzugt liegt der Polymerisationsgrad beim Abbruch der Polymerisation zwischen 10 und 50 Gew%, besonders bevorzugt zwischen 20 und 40 Gew%.

Es hat sich überraschend als besonders vorteilhaft erwiesen, wenn das in dem hier beschriebenen Verfahren, durch das das Reaktionsharz herstellbar ist, gebildete Polymer eine Glasübergangstemperatur unterhalb der umgebenden Raumtemperatur aufweist, also bei Raumtemperatur auch im isolierten Zustand flüssig wäre.

Bevorzugt besteht die Monomermischung zu mindestens 90 Gew% aus Acrylaten und/oder Methacrylaten. Besonders bevorzugt enthält die Monomerzusammensetzung dabei 20 bis 60 Gew%, besonders bevorzugt 25 bis 50 Gew% MMA.

Bei dem säurefunktionellen Monomer handelt es sich bevorzugt um Acrylsäure, Methacrylsäure, Itaconsäure und/oder 2-Carboxy-ethylacrylat, besonders bevorzugt um 2-Carboxy-ethylacrylat.

Bevorzugt werden bis zu 5 Gew% der säurefunktionellen Monomere in der Monomermischung eingesetzt.

Neben den säurefunktionellen Monomeren enthält die Monomerzusammensetzung weitere Monomere, die bevorzugt ausgewählt werden aus MMA, n-Butyl(meth)acrylat, iso-Butyl(meth)acrylat, Ethyl(meth)acrylat, Propyl(meth)acrylat, Ethylhexyl(meth)acrylat und/oder Styrol.

In einer besonderen Ausführungsform des Verfahrens, durch das das Reaktionsharz herstellbar ist, kann die Monomermischung zusätzlich ein Vernetzungsmittel enthalten, das bis zu 3 Gew%, bevorzugt bis 1 Gew%, besonders bevorzugt bis zu 0,3 Gew% di- oder trifunktionelle (Meth)acrylate oder Triallyl Cyanurate aufweist. Die Menge dieser vernetzenden Monomere wird dabei insbesondere derart eingestellt, dass sich in Abhängigkeit des Molekulargewichts, des Polymerisationsgrades und der übrigen Monomermischung keine Vernetzung, sondern nur eine Verzweigung der gebildeten Polymerketten einstellt. Diese Einstellung kann von einem Fachmann mit nur wenigen Versuchen in Abhängigkeit der übrigen erwähnten Parameter erfolgen.

Bevorzugt weist der polymere Bestandteil beim Abbruch der Polymerisation ein gewichtsmittleres Molekulargewicht Mw zwischen 10.000 und 200.000 g/mol, bevorzugt zwischen 20.000 und 150.000 g/mol und besonders bevorzugt zwischen 30.000 und 100.000 g/mol auf. Das gewichtsmittlere Molekulargewicht wird dabei mittels GPC gegen einen PMMA-Standard unter Einsatz von mindestens vier geeigneten Säulen mit THF als Eluent durchgeführt.

Die erfindungsgemäße Formulierung zur 2K-Intumeszenz-Beschichtung ist insbesondere dadurch gekennzeichnet, sie dass zu einem Zeitpunkt nach Mischen des 2K-Systems 30 bis 50 Gew% des Reaktionsharzes, das durch das vorstehend beschriebene Verfahren herstellbar ist, 35 bis 60 Gew% eines Treibmittels, 0,1 bis 2,5 Gew% eines Peroxids und/oder Azoinitiators, bevorzugt nur Peroxide wie zum Beispiel Benzoylperoxid, optional bis zu 2 Gew% eines Beschleunigers, optional 4,9 bis 15 Gew% Additive und 5 bis 30 Gew% Füllstoffe aufweist. Optional kann die Formulierung zusätzliche Pigmente aufweisen.

Bei den Additiven kann es sich insbesondere um Netzmittel, Filmbildner, Entlüftungsreagenzien und/oder Dispergierhilfsmittel handeln. Bei den optional eingesetzten Beschleunigern handelt es sich in der Regel um sekundäre Amine.

Bei den Füllstoffen kann es sich beispielsweise um Siliziumdioxid, Titandioxid, Quarz oder andere, vor allem thermisch stabile anorganische Verbindungen handeln. Anorganische Füllstoffe wie Carbonate, die sich thermisch zersetzen können, dürfen nur in einem geringerem Maß eingesetzt werden, um ein unkontrolliertes zusätzliches Schäumen der Beschichtung im Brandfall zu vermeiden. Ein besonders bevorzugter Füllstoff ist Titandioxid.

Bezüglich der Treibmittel gibt es verschiedene Alternativen. In einer besonders bevorzugten Alternative können Polyphosphate eingesetzt werden, die sich bei 190 bis 300 °C zu Phosphorsäure umsetzen. Zusätzlich enthält die Formulierung Pentaerythritol, welches darauf bei über 300 °C in Anwesenheit der Phosphorsäure unter Abspaltung von Wasser und Kohlendioxid einen Kohlenstoffschaum bildet. Wasser und Kohlendioxid wirken dabei als Treibmittel. Ein zusätzlicher Vorteil dieser Alternative ist dabei, dass die Polyphosphate, wie auch die Phosphorsäure als zusätzliches Flammschutzmittel wirken.

In einer zweiten Alternative wird Melamin eingesetzt, welches bei über 350 °C zu Ammoniak, Stickstoff und Kohlendioxid zersetzt wird, welche alle drei dabei als Treibmittel wirken.

Durch eine Kombination dieser beiden Alternativen, lassen sich zusätzlich weitere Vorteile neben der Flammschutzwirkung realisieren. So kann der Schäumungsgrad feiner eingestellt werden. Auch kommt es zu einem stufenweisen Schäumen, was wiederum Vorteile bezüglich der Schaumstabilität bewirkt. Das Initiatorsystem besteht in der Regel aus einem oder mehreren Peroxiden und/oder Azoinitiatoren, bevorzugt einem Peroxid, und aus einem Beschleuniger, in der Regel ein oder mehrere tertiäre Amine, insbesondere einem aromatischen tertiären Amin. Ein besonders geeignetes Beispiel für einen solchen Initiator ist di-Benzoylperoxid, welches z.B. auch als sichere, vorformulierte Paste eingesetzt werden kann, wobei die Hilfsstoffe dieser Paste, wie z.B. Paraffine, in den entsprechenden Konzentrationen in der Formulierung nicht stören. Beispiele für die Beschleuniger sind insbesondere N,N-di-Alkyl-para-toulidine, wie beispielsweise N,N-bis-(2-Hydroxypropyl)-para-toluidin oder N,N-diMethyl-para-toluidin oder N,N-di-Methylanilin.

Die Formulierung der eigentlichen Beschichtungszusammensetzung kann wie folgt erfolgen: das Reaktionsharz wird mit den Treibmitteln, Additiven, optionalen Füllstoffen und weiteren optionalen Füllstoffen formuliert. Darauf erfolgt eine Aufteilung dieser Zwischenformulierungen in zwei z.B. gleichgroße Fraktionen. Eine dieser Fraktionen wird dann zusätzlich mit dem Beschleuniger vermischt. Diese beiden Fraktionen sind daraufhin für lange Zeit lagerstabil.

Vor der eigentlichen Applikation wird dann die Beschleuniger-freie Fraktion mit dem Initiator oder Initiatorgemisch versetzt. Nach längerer Lagerung oder Transport kann es vorher nötig sein, beide Fraktionen noch einmal aufzurühren, da sich z.B. Füllstoffe abgesetzt haben können. Nach dem Einrühren bzw. anderswertigen Einmischen des Initiators werden dann beide Fraktionen des 2K-Systems miteinander vermischt. Dabei wird die Polymerisation der monomeren Bestandteile des Reaktionsharzes gestartet und es beginnt die so genannte Topfzeit, innerhalb derer die Applikation auf dem Substrat, also z.B. einem Stahlträger, erfolgen muss. Bei modernen Applikationsvorrichtungen kann die Mischung der beiden Fraktionen des 2K-Systems auch in einer Mischkammer einer Applikationsdüse direkt vor dem mit Druck indiziertem Aufsprühen erfolgen.

Die Topfzeiten ergeben sich aus einer Kombination aus Art und Konzentration von Initiator und Beschleuniger, der Monomerzusammensetzung und äußeren Einflussfaktoren, wie z.B. die Umgebungstemperatur. Diese Faktoren lassen sich für den Fachmann einfach abschätzen und einstellen. In der Regel wird mit mehrminütigen bis zu mehrstündigen Topfzeiten, die auch die 20 Stunden Marke überschreiten können, gearbeitet.

Weiterhin ist ein Verfahren zur Intumeszenz-Beschichtung einer Metalloberfläche Gegenstand der vorliegenden Erfindung. In diesem Verfahren wird die zuvor beschriebene die Formulierung zur 2K-Intumeszenz-Beschichtung hergestellt, binnen 1 bis 20 Minuten auf die Metalloberfläche aufgetragen und dort innerhalb von 60 Minuten bei einer Temperatur zwischen 0 und 30 °C ausgehärtet. Die bevorzugte Schichtdicke der nicht geschäumten Beschichtung beträgt dabei 1 bis 20 mm, bevorzugt 2,5 bis 7,5 mm. Dies wäre dabei derart formuliert, dass die Beschichtung in einem Brandfall bevorzugt zu einer Schichtdicke des Schaums von 20 bis 100 mm, bevorzugt 30 bis 50 mm führen würde.

### Beispiele

Die in den Ansprüchen wiedergegebenen Glasübergangstemperaturen wurden mittels der Fox-Gleichung berechnet und diese sind maßgeblich. Zur Kontrolle erfolgte eine Bestimmung der Glasübergangstemperatur via DSC. Dabei wurden Abweichungen von den mittels Fox-Gleichung bestimmten Werten von kleiner 2 °C ermittelt.

Die Messung der Glasüberganstemperaturen mittels DSC erfolgt gemäß DIN EN ISO 11357-4 mit folgendem Messprogram:
1.) Abkühlen auf -30°C und Halten der Temperatur für 10 min
2.) Aufheizen von -30 °C auf 60 °C mit 10 K/min
3.) Halten der Temperatur bei 60 °C für 5 min
4.) Abkühlen auf 0 °C und Halten der Temperatur für 5 min
5.) Aufheizender Probe von 0 °C auf 120 °C mit 10 K/min
6.) Halten der Temperatur von 120 °C für 5 min.

Die Bestimmung der Glasübergangstemperatur erfolgt dabei in Schritt 5.) Als Geräte wurden dabei verwendet:
DSC 1, Dynamische Wärmestrom-Differenzkalorimetrie von Mettler Toledo
Analysenwaage mit einer Genauigkeit von 0,001mg
Tiegel und Universaltiegelpresse von Mettler Toledo

**Die Molgewichtsbestimmung erfolgte mittels** Gelpermeationschromatographie (GPC) in Anlehnung an DIN 55672-1:
SDV-Säulen
Eluent: THF versetzt mit 0,1 Gewichts-% Trifluoressigsäure
Messtemperatur 35°C
Universelle Kalibrierung gegen Polystyrolstandards und Umrechnung in PMMA-Äquivalente über Mark-Howink-Beziehung.

### Beispiel 1:

Die Monomermischung, bestehend aus 44,64 Gew% MMA, 46,24 Gew% Ethylhexylmethacrylat, 8,81 Gew% n-Butylmethacrylat und 0,31 Gew% beta-CEA, wird bei Raumtemperatur mit di-(4-tert.-Butylcyclohexyl)peroxydicarbonat oder 2,2'-Azobis-(isobutyronitril) für das Zielmolekulargewicht von 60.000 g/mol gemischt. Ein 50 %iger Anteil der Monomermischung wird als Vorbatch unter Rühren auf 74 °C aufgeheizt, die Heizung abgestellt und bei 86 °C durch kontinuierliche Zugabe des zweiten 50 % ausmachenden Anteils der Monomermischung autotherm bei 93 °C polymerisiert. Nach ca. 30 Minuten Dosierzeit ist der Prozess abgeschlossen. Der Ansatz wird nach der Nachreaktionszeit langsam bis auf 30 °C gekühlt und mit 15 ppm (15 mg/kg) 2,6-di-tert-butyl-4-methyl-phenol (Topanol O) stabilisiert.

Die Viskosität wird über die Auslaufzeit 55 s Becher 4, entspricht 30 - 150 mPa*s bei 20 °C bestimmt. Der Zielpolymergehalt liegt bei ca. 25 %. Das gebildete Polymer hat gemäß Fox-Gleichung eine Glasübergangstemperatur von -7,71 °C und ist nicht vernetzt.

### Beispiel 2:

Die Monomermischung, bestehend aus - bezogen auf die Gesamtmenge der eingesetzten Monomere - 15,09 Gew% Ethylhexylmethacrylat, 8,81 Gew% n-Butylmethacrylat und 0,31 Gew% beta-CEA, wird bei Raumtemperatur in einem 1L Doppelmantel-Reaktor vorgelegt und darauf mit Initiator tert.-Butyl-2-ethylperoxyhexanoat (TBPEH) und Regler Thioglycolsäure-2-ethylhexylester (TGEH) gemischt. Die Mengen sind für das Zielpolymergewicht von ca. 60.000 g/mol eingestellt. Diese Reaktionsmischung wird unter Rühren auf 75°C (Wasserbad) aufgeheizt.

Nach ca.15 Min startet die Reaktion und es wird ein stätiger Temperaturanstieg um ca. 15 bis 20°C beobachtet. Nach ca. 2,5 Std ist die Maximaltemperatur erreicht und der Prozess abgeschlossen.

Die Innentemperatur fällt. Bei ca. 80°C wird der Thermostat auf 80°C gestellt und der Ansatz wird ca. 1 h nachreagiert. Dabei ist ein Ansteigen der Viskosität zu beobachten.

Vor dem Abkühlen wird das Polymer mit einer zweiten Monomermischung, bestehend aus 44,64 Gew% MMA und 31,15 Gew% Ethylhexylmethacrylat, verdünnt und mit 15 ppm (15 mg/kg) 2,6-di-tert.-butyl-4-methyl-phenol (Topanol O) stabilisiert.

Die Viskosität wird über die Auslaufzeit 30 bis 80 s (Becher 4) bei 20°C bestimmt. Dies entspricht einer Viskosität von 30 bis 150 mPa*s. Das gebildete Polymer hat gemäß Fox-Gleichung eine Glasübergangstemperatur von 5,4 °C und ist nicht vernetzt.

### Der Zielpolymergehalt liegt bei ca.25%

### Anwendungsbeispiel:

42 Gew% des Reaktionsharzes gemäß Beispiel 1 werden jeweils mit 29 Gew% Ammoniumphosphat, 8 Gew% Pentaerythritol, 10 Gew% Melamin und 10 Gew% Titandioxid vorformuliert. Diese Formulierungen werden darauf in jeweils zwei gleichgroße Fraktionen geteilt, wobei einer Fraktion, bezogen auf die Gesamtformulierung, 0,5 Gew% N,N-di-Methyl-para-toluidin und der anderen Fraktion 0,5 Gew% Benzoylperoxid zugesetzt werden. Diese beiden Fraktionen werden daraufhin miteinander vermischt und ein kleinerer Teil entnommen. Mit dem größeren Teil wird eine Stahlplatte in einer Schichtdicke von 7 mm beschichtet, während an der kleineren Probe die Topfzeit und die Maximaltemperatur nach dem Mischen gemessen werden. Die Topfzeit, also die Zeit innerhalb derer die Viskosität ideal für einen Auftrag der Beschichtung ist, betrug 13 min. Die Maximaltemperatur von 59,8 °C wurde nach 40 min erreicht.

## Patentansprüche

1. Formulierung zur 2K-Intumeszenz-Beschichtung, **dadurch gekennzeichnet, dass** die Formulierung nach Mischen des 2K-Systems 30 bis 50 Gew% eines Reaktionsharzes, das herstellbar ist durch ein Verfahren, bei dem eine Monomermischung, enthaltend mindestens ein säurefunktionelles Monomer, bis zu einem Polymerisationsgrad von maximal 70 % polymerisiert und darauf die Polymerisation abgebrochen wird, und das dabei gebildete Polymer eine Glasübergangstemperatur von kleiner 23 °C aufweist, berechnet mittels Fox-Gleichung, 35 bis 60 Gew% eines Treibmittels, 0,1 bis 2,5 Gew% eines Peroxids und/oder Azoinitiators, optional bis zu 2 Gew% eines Beschleunigers, optional 4,9 bis 15 Gew% Additive und 5 bis 30 Gew% Füllstoffe aufweist.

2. Formulierung gemäß Anspruch 1, **dadurch gekennzeichnet, dass** die Formulierung zusätzlich Pigmente aufweist.

3. Formulierung gemäß Anspruch 1 oder 2, **dadurch gekennzeichnet, dass** die Monomermischung zu mindestens 90 Gew% aus Acrylaten und/oder Methacrylaten besteht.

4. Formulierung gemäß einem der Ansprüche 1 bis 3, **dadurch gekennzeichnet, dass** es sich bei dem säurefunktionellen Monomer um Acrylsäure, Methacrylsäure, Itaconsäure und/oder 2-Carboxy-ethylacrylat, bevorzugt um 2-Carboxy-ethylacrylat handelt.

5. Formulierung gemäß einem der Ansprüche 1 bis 4, **dadurch gekennzeichnet, dass** die Monomerzusammensetzung 20 bis 60 Gew% MMA enthält.

6. Formulierung gemäß einem der Ansprüche 1 bis 5, **dadurch gekennzeichnet, dass** die Monomerzusammensetzung, aus dem säurefunktionellen Monomer und weiteren Monomeren, ausgewählt aus MMA, n-Butyl(meth)acrylat, iso-Butyl(meth)acrylat, Ethyl(meth)acrylat, Propyl(meth)acrylat, Ethylhexyl(meth)acrylat und/oder Styrol besteht.

7. Formulierung gemäß einem der Ansprüche 1 bis 6, **dadurch gekennzeichnet, dass** die Monomermischung bis zu 3 Gew% di- oder trifunktionelle (Meth)acrylate aufweist.

8. Formulierung gemäß einem der Ansprüche 1 bis 7, **dadurch gekennzeichnet, dass** der polymere Bestandteil des Reaktionsharzes ein gewichtsmittleres Molekulargewicht M_{w} zwischen 10.000 und 200.000 g/mol aufweist, bestimmt mittels GPC gegen einen PMMA-Standard unter Finsatz von mindestens vier Säulen mit THF als Fluent

9. Formulierung gemäß einem der Ansprüche 1 bis 8, **dadurch gekennzeichnet, dass** das gebildete Polymer eine Glasübergangstemperatur zwischen -20 °C und 20 °C aufweist, berechnet mittels Fox-Gleichung.

10. Formulierung gemäß einem der Ansprüche 1 bis 9, **dadurch gekennzeichnet, dass** der Polymerisationsgrad beim Abbruch der Polymerisation zwischen 10 und 50 Gew% liegt.

11. Verfahren zur Intumeszenz-Beschichtung einer Metalloberfläche, **dadurch gekennzeichnet, dass** die Formulierung gemäß einem der Ansprüche 1 bis 10 hergestellt, binnen 1 bis 20 Minuten auf die Metalloberfläche aufgetragen wird und dort innerhalb von 60 Minuten bei einer Temperatur zwischen 0 und 30 °C aushärtet.

## Claims

1. Formulation for 2-component intumescent coating, **characterized in that** the formulation after mixing of the 2-component system contains 30 to 50 wt% of a reactive resin preparable by a process in which a monomer mixture comprising at least one acid-functional monomer is polymerized to a degree of polymerization of not more than 70%, after which the polymerization is discontinued, and the polymer formed in this case has a glass transition temperature of less than 23°C, calculated by means of the Fox equation, 35 to 60 wt% of a blowing agent, 0.1 to 2.5 wt% of a peroxide and/or azo initiator, optionally up to 2 wt% of an accelerator, optionally 4.9 to 15 wt% of additives and 5 to 30 wt% of fillers.

2. Formulation according to Claim 1, **characterized in that** the formulation additionally contains pigments.

3. Formulation according to Claim 1 or 2, **characterized in that** the monomer mixture consists to an extent of at least 90 wt% of acrylates and/or methacrylates.

4. Formulation according to any of Claims 1 to 3, **characterized in that** the acid-functional monomer comprises acrylic acid, methacrylic acid, itaconic acid and/or 2-carboxyethyl acrylate, preferably 2-carboxyethyl acrylate.

5. Formulation according to any of Claims 1 to 4, **characterized in that** the monomer composition comprises 20 to 60 wt% of MMA.

6. Formulation according to any of Claims 1 to 5, **characterized in that** the monomer composition consists of the acid-functional monomer and of further monomers selected from MMA, n-butyl (meth)acrylate, isobutyl (meth)acrylate, ethyl (meth)acrylate, propyl (meth)acrylate, ethylhexyl (meth)acrylate and/or styrene.

7. Formulation according to any of Claims 1 to 6, **characterized in that** the monomer mixture contains up to 3 wt% of di- or trifunctional (meth)acrylates.

8. Formulation according to any of Claims 1 to 7, **characterized in that** the polymeric constituent of the reactive resin has a weight-average molecular weight M_{w} of between 10 000 and 200 000 g/mol, determined by means of GPC against a PMMA standard, using at least four columns, with THF as eluent.

9. Formulation according to any of Claims 1 to 8, **characterized in that** the polymer formed has a glass transition temperature of between -20°C and 20°C, calculated by means of the Fox equation.

10. Formulation according to any of Claims 1 to 9, **characterized in that** the degree of polymerization on discontinuation of the polymerization is between 10 and 50 wt%.

11. Method for the intumescent coating of a metal surface, **characterized in that** the formulation according to any of Claims 1 to 10 is prepared, is applied within 1 to 20 minutes to the metal surface, and cures there within 60 minutes at a temperature of between 0 and 30°C.

## Revendications

1. Formulation pour un revêtement intumescent à 2 composants, **caractérisée en ce que** la formulation présente, après le mélange du système à 2 composants, 30 à 50% en poids d'une résine réactive, qui peut être préparée par un procédé dans lequel un mélange de monomères, contenant au moins un monomère à fonction acide, est polymérisé jusqu'à un taux de polymérisation d'au maximum 70% puis la polymérisation est interrompue et le polymère ainsi formé présente une température de transition vitreuse inférieure à 23°C, calculée au moyen de l'équation de Fox, 35 à 60% en poids d'un agent gonflant, 0,1 à 2,5% en poids d'un peroxyde et/ou d'un initiateur azo, éventuellement jusqu'à 2% en poids d'un accélérateur, éventuellement 4,9 à 15% en poids d'additifs et 5 à 30% en poids de charges.

2. Formulation selon la revendication 1, **caractérisée en ce que** la formulation présente en outre des pigments.

3. Formulation selon la revendication 1 ou 2, **caractérisée en ce que** le mélange de monomères est constitué à raison d'au moins 90% en poids d'acrylates et/ou de méthacrylates.

4. Formulation selon l'une des revendications 1 à 3, **caractérisée en ce que** le monomère à fonction acide est l'acide acrylique, l'acide méthacrylique, l'acide itaconique et/ou l'acrylate de 2-carboxy-éthyle, de préférence l'acrylate de 2-carboxy-éthyle.

5. Formulation selon l'une des revendications 1 à 4, **caractérisée en ce que** la composition de monomères contient 20 à 60% en poids de MMA.

6. Formulation selon l'une des revendications 1 à 5, **caractérisée en ce que** la composition de monomères est constituée du monomère à fonction acide et d'autres monomères choisis parmi le MMA, le (méth)acrylate de n-butyle, le (méth)acrylate d'isobutyle, le (méth)acrylate d'éthyle, le (méth)acrylate de propyle, le (méth)acrylate d'éthylhexyle et/ou le styrène.

7. Formulation selon l'une des revendications 1 à 6, **caractérisée en ce que** le mélange de monomères présente jusqu'à 3% en poids de (méth)acrylates difonctionnels ou trifonctionnels.

8. Formulation selon l'une des revendications 1 à 7, **caractérisée en ce que** le constituant polymère de la résine réactive présente une masse moléculaire moyenne en nombre M_{w} entre 10.000 et 200.000 g/mole, déterminée par CPG par rapport à un standard de PMMA avec utilisation d'au moins quatre colonnes et du THF comme éluant.

9. Formulation selon l'une des revendications 1 à 8, **caractérisée en ce que** le polymère formé présente une température de transition vitreuse située entre -20°C et 20°C, calculée au moyen de l'équation de Fox.

10. Formulation selon l'une des revendications 1 à 9, **caractérisée en ce que** lors de l'interruption de la polymérisation, le taux de polymérisation est situé entre 10 et 50% en poids.

11. Procédé de revêtement intumescent d'une surface métallique, **caractérisé en ce que** la formulation selon l'une des revendications 1 à 10 est préparée, appliquée sur la surface métallique en l'espace de 1 à 20 minutes et y est durcie en l'espace de 60 minutes à une température située entre 0 et 30°C.
